# EUROPEAN PATENT SPECIFICATION

(11) **EP 3 718 835 B1**
(45) Date of publication and mention of the grant of the patent: **04.12.2024**
(21) Application number: 18872290.4
(22) Date of filing: 31.01.2018
(51) Int. Cl.: B60S 5/06, B60L 53/30, B60L 53/80, B66F 7/26, B66F 7/28

(54) **BATTERY SWAPPING PLATFORM AND BATTERY CHARGING AND SWAPPING STATION HAVING SAME**
BATTERIEWECHSELPLATTFORM UND BATTERIELADE- UND WECHSELSTATION DAMIT
PLATEFORME DE PERMUTATION DE BATTERIE ET STATION DE CHARGE ET DE PERMUTATION DE BATTERIE COMPRENANT LADITE PLATEFORME

(30) Priority: 31.10.2017 CN 201721424676 U
(43) Date of publication of application: 07.10.2020
(73) Proprietor: NIO (Anhui) Holding Co., Ltd., Hefei City, Anhui Province (CN)
(72) Inventor: YAN, Bingyong, Anting, Jiading Shanghai (CN); HAO, Zhanduo, Anting, Jiading Shanghai (CN)
(74) Representative: Vossius & Partner Patentanwälte Rechtsanwälte mbB
(86) International application number: PCT/CN2018/074819
(87) International publication number: WO 2019/085305

(56) References cited:
- CN-A- 102 328 636
- CN-A- 102 407 832
- CN-A- 106 740 726
- CN-A- 106 891 865
- CN-U- 206 086 672
- US-A1- 2015 151 723
- US-A1- 2015 151 723

## Description

### Technical Field

The invention relates to the field of battery swapping, and in particular to a battery swap platform and a battery charging and swap station comprising the battery swap platform.

### Background Art

With the popularization of new energy vehicles, how to provide fast and effective energy supply for vehicles having insufficient energy has become an issue that concerns car owners and all major manufacturers a lot. Taking electric vehicles as an example, one of the current mainstream power supply solutions is a battery replacement solution. The battery replacement solution is one of the main development directions of power supply because it can replace the traction battery in a very short time and has no obvious influence on the service life of the traction battery. In the battery replacement solution, battery swap at the bottom of an electric vehicle is a mainstream battery swap method, and this battery swap method is generally completed in a special battery charging and swap station. Specifically, a battery storage for storing batteries, a battery swap platform and a battery swap robot, such as a rail guided vehicle (RGV), for carrying fresh/used traction batteries between the battery storage and the battery swap platform are arranged in the battery charging and swap station. The battery swap robot completes the action of replacing the traction battery for the electric vehicle parked on the battery swap platform by reciprocating on track rails laid in advance between the battery storage and the battery swap platform.

At present, for most battery charging and swap stations, the electric vehicle battery swap platform is generally a direct-entry type platform, that is, after the electric vehicle enters the battery charging and swap station and reaches the battery swap position, the battery swap robot directly enters from between two wheels on one side of the electric vehicle and stops at a projection position of the battery swap position, and then directly detaches a traction battery or directly installs a traction battery for the electric vehicle according to an arrangement direction of the traction battery. However, the disadvantage of this arrangement is that because the projection of the traction battery is generally a rectangle and the direction from the front to the rear of the vehicle is the long side of the rectangle, for battery charging and swap stations with the same battery capacity, the arrangement of the direct-entry type battery swap platform makes the battery storage of the battery charging and swap station need more space to store batteries. That is to say, for battery charging and swap stations with the same capacity, the battery charging and swap station using a direct-entry type battery swap platform has the problem of resource waste caused by a large occupied area. CN 206 086 672 U discloses a dolly of plugging into is changed to battery, including elevating system, side telephone-moving structure, running gear and rotary mechanism, elevating system sets up on running gear, the establishment of institution is moved on elevating system to the side, rotary mechanism sets up on the side telephone-moving constructs. However, the holding plate does not provide a rotating table and a guide rail arranged on the rotating table, and thus in case of a battery swap robot to rest thereon, there is no guide rails for the battery swap robot to move along. US 2015/151723A1 discloses a battery replacement robot with a mobile storage rack including a mechanical part and an electrical control part. The electrical control part controls a battery replacement device to place, in one step, all battery boxes required by one side of an electric bus that needs battery replacement onto a battery box storage rack. However, it actually provides a structure of a battery replacement robot, not a battery swap platform for a battery swap robot to rest thereon.

Accordingly, there is a need in the art for a novel battery swap platform to solve the above problems.

### Summary of the Invention

In order to solve the above-mentioned problem in the prior art, that is, to solve the problem of waste of resources caused by a large occupied area of a battery charging and swap station using a direct-entry type battery swap platform, the invention provides a battery swap platform comprising a fixed structure and a rotating portion, wherein the rotating portion allows a battery swap robot to rest thereon, and the rotating portion is configured to be rotatable by a set angle relative to the fixed structure.

The rotating portion comprises a rotating table and a guide rail arranged on the rotating table, and the battery swap robot can move along the guide rail.

In a preferred technical solution of the battery swap platform described above, the fixed structure comprises a base, the battery swap platform further comprises a driving portion arranged on the base, and the driving portion can drive the rotating table to rotate.

In a preferred technical solution of the battery swap platform described above, the driving portion comprises an electric motor and a first transmission member, the rotating table is provided with a second transmission member matching the first transmission member, and the electric motor can drive the first transmission member to rotate, thereby driving the second transmission member to rotate.

In a preferred technical solution of the battery swap platform described above, a reducer is further arranged between the electric motor and the first transmission member, a third transmission member is arranged on an output shaft of the reducer, and the third transmission member is mated and connected with the first transmission member.

In a preferred technical solution of the battery swap platform described above, the first transmission member is a first gear or a linear rack, and/or the second transmission member is a circumferential rack, and/or the third transmission member is a second gear.

In a preferred technical solution of the battery swap platform described above, one of the base and the rotating table is provided with a hole structure, the other of the base and the rotating table is provided with a shaft structure, and the hole structure and the shaft structure are rotatably connected via a bearing.

In a preferred technical solution of the battery swap platform described above, the base is provided with a first positioning hole, the rotating portion is correspondingly provided with a second positioning hole, and the first positioning hole and the second positioning hole can be connected by a positioning pin inserted therein so as to realize relative fixation of the rotating table and the base.

In a preferred technical solution of the battery swap platform described above, the base is fixedly connected to a floor of the battery charging and swap station through bolts, and/or the set angle is 90 degrees.

The invention also provides a battery charging and swap station, which comprises a battery swap platform, a battery storage and a battery swap robot, wherein the battery swap platform is the battery swap platform in any one of the above technical solutions.

Those skilled in the art can understand that in the preferred technical solutions of the invention, the battery swap platform comprises a fixed structure, a rotating portion and a driving portion, wherein the driving portion drives the rotating portion to rotate relative to the fixed structure. The fixed structure comprises a base. The rotating portion comprises a rotating table, a guide rail and a second transmission member. The driving portion comprises an electric motor, a reducer, a transmission gear and a first transmission member. Preferably, the first transmission member is a gear or a linear rack, and the second transmission member is a circumferential rack. With the arrangement in which the driving portion drives the rotating portion to rotate, that is, the electric motor transmits the driving force to the reducer, the reducer drives the transmission gear to rotate, the transmission gear drives the gear or the linear rack to rotate or move linearly, and then the gear or the linear rack drives the circumferential rack arranged on the rotating table to rotate, the battery swap platform of the invention can change the orientation of the battery swap robot through the rotation of the rotating table after the battery swap robot reaches the rotating table along the guide rail. As a result, the battery swap robot can reach the battery swap position more easily from between two wheels on one side of the vehicle, thus reducing the difficulty in design of the battery swap platform; and the traction batteries in the battery storage can also be arranged in a direction perpendicular to the forward direction of the vehicle so as to fully utilize the space of the battery charging and swap station, thereby reducing the occupied area of the battery charging and swap station and saving resources. In other words, the invention solves the problem of a large occupied area and thus waste of resources of a battery charging and swap station using a direct-entry type battery swap platform.

In addition, the base is further provided with a positioning pin, and the rotating table is correspondingly provided with a positioning hole, and the positioning pin can be fitted with and inserted into the positioning hole after the rotating table rotates by a set angle. It can be seen from this that the positioning pin and the positioning hole enable the rotating table to stop at a set position accurately after rotation, that is, the positioning of the rotating table is more accurate, and the battery swapping stability of the battery swap platform is enhanced.

### Brief Description of the Drawings

Hereinafter, a battery swap platform and a battery charging and swap station comprising the battery swap platform according to the invention will be described with reference to the accompanying drawings. In the accompanying drawings:
Fig. 1 is a schematic layout diagram of a battery charging and swap station in the prior art;
Fig. 2 is a schematic top view of a battery swap platform (in an initial position) of the invention;
Fig. 3 is a schematic top view of the battery swap platform (in a rotated position) of the invention;
Fig. 4 is a front sectional view of the battery swap platform of the invention;
Fig. 5 is a schematic structure diagram of a driving portion of the battery swap platform of the invention; and
Fig. 6 is a schematic layout diagram of a battery charging and swap station of the invention.

### List of reference signs

1. Base; 2. Rotating portion; 21. Rotating table; 22. Guide rail; 23. Second transmission member; 24. Second positioning hole; 3. Driving portion; 31. Electric motor; 32. Reducer; 33. First transmission member; 34. Third transmission member; 4. Bearing; 5. Positioning pin.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although the first transmission member in the accompanying drawings is described with a cylindrical gear, this arrangement form is not invariable, and those skilled in the art can make adjustments according to needs to adapt to specific applications, for example, the first transmission member can also be a bevel gear or a linear rack, etc.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

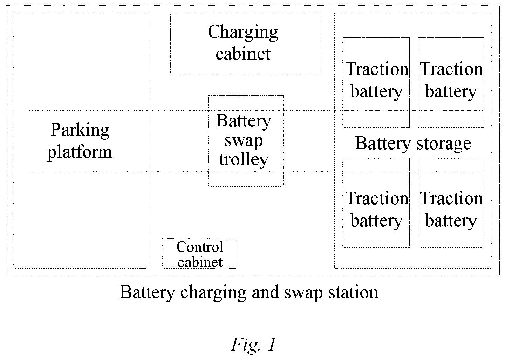

First of all, referring to Fig. 1, Fig. 1 is a schematic layout diagram of a battery charging and swap station in the prior art. As shown in Fig. 1, in the battery charging and swap station in the prior art, a battery swap platform is usually arranged in a direct-entry type, wherein a battery swap robot directly enters from between two wheels on one side of an electric vehicle and reaches a projection position of a battery swap position, and then directly detaches a traction battery or directly installs a traction battery for the electric vehicle according to an arrangement direction of the traction battery. As mentioned in the background art, the battery charging and swap station of the prior art uses the arrangement of a direct-entry type battery swap platform, so that the battery storage of the battery charging and swap station needs more space to store traction batteries. That is to say, for battery charging and swap stations with the same capacity, the battery charging and swap station using a direct-entry type battery swap platform has the problem of resource waste caused by a large occupied area.

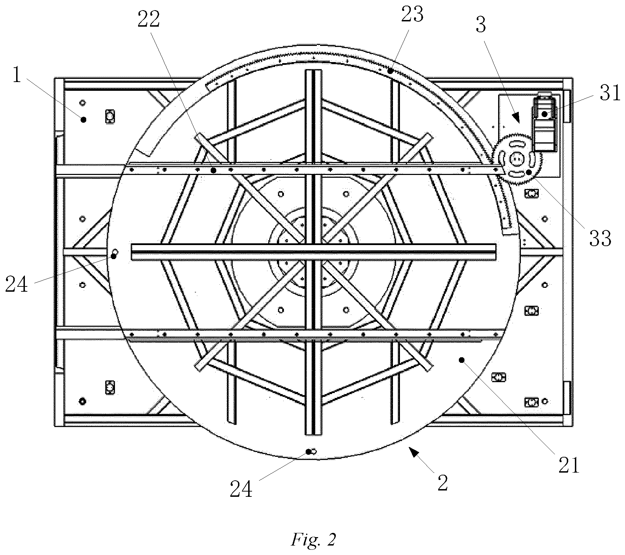

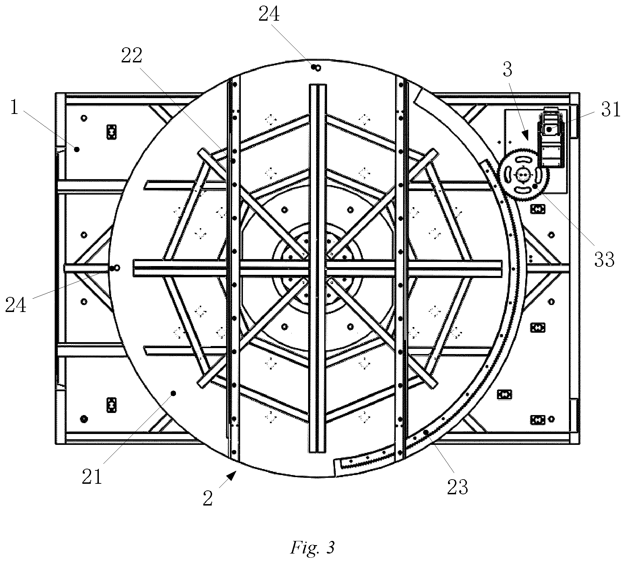

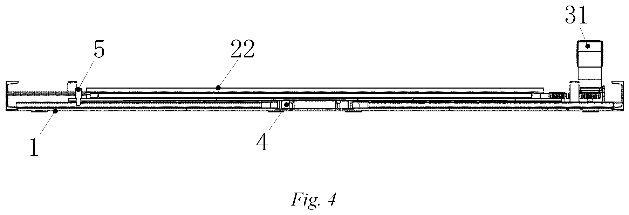

Next, the principle of the invention will be explained with reference to Figs. 2 to 4. Fig. 2 is a schematic top view of a battery swap platform (in an initial state) of the invention, Fig. 3 is a schematic top view of the battery swap platform (in a rotated state) of the invention, and Fig. 4 is a front sectional view of the battery swap platform of the invention.

As shown in Fig. 2, in order to solve the above problem, the invention provides a battery swap platform, which mainly comprises a fixed structure, a rotating portion 2 and a driving portion 3. The fixed structure comprises a base 1, which is fixedly connected to a set position in the charging and changing power station. The rotating portion 2 is arranged on the base 1 in a manner that the rotating portion can rotate by a set angle relative to the base 1, for example, after the battery swap robot reaches the rotating portion 2 and stops thereon, the rotating portion 2 rotates by a set angle, while the driving portion 3 can drive the rotating portion 2 to rotate, that is, provide power for the rotation of the rotating portion 2. Preferably, the base 1 is fixedly connected to the floor of the battery charging and swap station by bolts (such as anchor bolts), and the set angle of rotation of the base is 90 degrees.

It can be seen that through the arrangement of the rotating portion 2 described above, the battery swap platform of the invention can change the orientation of the battery swap robot resting thereon, which in turn changes the orientation of the traction battery, thus enabling a rational layout with the space of the battery storage, solving the problem of a large occupied area and thus waste of resources of a battery charging and swap station using a direct-entry type battery swap platform. Specifically, referring to the prior art in Fig. 1, it can be seen that since the projection of a traction battery is generally a rectangle, under the condition that the battery swap platform must meet the requirement of the vehicle length, traction batteries must be arranged in the same direction as the installation direction of the traction battery on the electric vehicle (i.e., longitudinal arrangement), and this arrangement tends to cause a waste of space of the battery charging and swap station. However, due to the fact that the orientation of the battery swap robot/traction battery can be changed according to the invention, the arrangement of the traction batteries in the battery storage is more flexible, for example, a direction perpendicular to the installation direction of the traction battery on the electric vehicle (i.e. a transverse arrangement) can be used, or the combination of the transverse arrangement and the longitudinal arrangement can be used to further enhance the space utilization rate of the battery storage. Further, The arrangement of the rotating portion 2 also makes it easier for the battery swap robot to reach the battery swap position from between the two wheels on one side of the vehicle, thus avoiding the phenomenon of battery swap failure caused by motion interference between the battery swap robot and the two wheels on the same side, i.e. reducing the complexity of the battery swap process and the difficulty in the design of the battery swap platform.

Certainly, the preferred arrangement above is only used to illustrate the principle of the invention, and is not used to limit the scope of protection of the invention. Without departing from the principle of the invention, those skilled in the art can make any form of adjustment. For example, the base 1 can also be fixedly connected through screws or rivets to the floor of the battery charging and swap station or other battery swap storey shelves where the battery swap trolley moves. The fixed structure can also be the floor of the battery charging and swap station, and the rotating portion 2 is directly arranged on the floor of the battery charging and swap station in such a way that the rotating portion can rotate by a set angle relative to a bottom surface. In addition, the set angle may be an angle of any other degrees such as 60 degrees and 75 degrees.

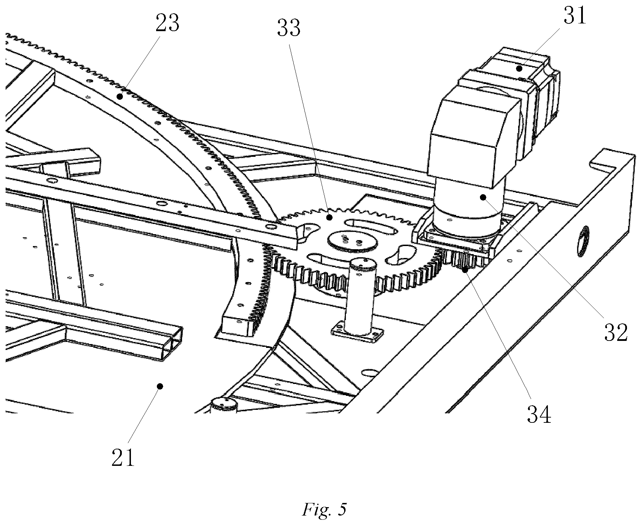

Referring further to Figs. 2 to 5, in a preferred embodiment, the rotating portion 2 further comprises a rotating table 21, and a guide rail 22 and a second transmission member 23 which are provided on the rotating table 21, and the rotating table 21 and the base 1 are connected via a bearing 4. The driving section 3 further comprises an electric motor 31, a reducer 32 mated and connected with the electric motor 31, a third transmission member 34 provided on an output shaft of the reducer 32, and a first transmission member 33 (see Fig. 5) connecting the second transmission member 23 and the third transmission member 34. When installed, the guide rail 22 on the rotating table 21 can be butted with the guide rail 22 laid in the battery charging and swap station, and the battery swap robot can move to the guide rail 22 on the rotating table 21 along the guide rail 22 laid in the battery charging and swap station and stop at a fixed battery swap position. The electric motor 31 can transmit the driving force to the third transmission member 34 through the reducer 32, then the third transmission member 34 drives the first transmission member 33 to move, and then the first transmission member 33 drives the second transmission member 23 to rotate, finally realizing the rotation of the rotating table 21.

Preferably, the first transmission member 33 is a first gear, such as a cylindrical or bevel gear, the second transmission member 23 is a circumferential rack, and the third transmission member 34 is a second gear, such as a cylindrical or bevel gear having specifications different from those of the first gear. Preferably, the base 1 is further provided with a hole structure (not shown), and the rotating table 21 is correspondingly provided with a shaft structure (not shown). An outer race of the bearing 4 is closely attached to the hole structure, and an inner race of the bearing 4 is closely attached to the shaft structure. Certainly, the positions where the shaft structure and the hole structure are provided can be interchanged.

Referring to Figs. 2 and 3, that is to say, the electric motor 31 transmits power to the second gear through the reducer 32 and causes the second gear to rotate. The second gear drives the first gear mated therewith to rotate, and then the first gear drives the circumferential rack mated therewith to rotate. Finally, the rotating table 21 achieves the rotation relative to the base 1 through the bearing 4.

The above arrangement has the following advantages. First of all, the rotation of the rotating table 21 can be realized through the combination of standard parts such as the electric motor 31, the reducer 32, the gears and the bearing 4, so that the invention has the advantages of being simple in principle and stable in structure. Secondly, the configuration of the electric motor 31, the reducer 32, and the plurality of gears and racks can also flexibly adjust the specifications, models and combination mode of the above-mentioned equipment or parts based on the actual situation, so as to adjust the rotation speed of the rotating table 21 and make the rotation of the rotating table 21 fast and stable, that is, the battery swap platform of the invention also has the characteristic of high flexibility.

For this reason, the arrangement described above of the first transmission member 33, the second transmission member 23 and the third transmission member 34 is not exclusive. In another preferred embodiment, a transmission with a linear rack and a circumferential rack may be used instead of the current mating of the first gear and the second gear. In the preferred solution, the electric motor 31 drives the linear rack to move linearly in a vertical direction (according to the orientation in Fig. 2) through the reducer 32, and the linear rack then drives the circumferential rack to realize the rotational movement of the rotating table 21. It is further preferable that the base 1 may be further provided with an elongated guide groove in the vertical direction so that the linear rack moves linearly in the vertical direction under the restriction of the guide groove. In this way, the linear rack and the circumferential rack can move more accurately, which is beneficial to the processing, manufacturing and installation of the driving portion 3, and can also solve the problem that the transmission is influenced by a too large gear clearance caused by inaccurate installation positions of the three gears in the previous preferred solution.

Referring to Figs. 2 and 4, in a more preferred embodiment, in order to further enhance the rotation accuracy and stability of the rotating table 21 and facilitate the installation, adjustment and calibration between the rotating table 21 and the base 1, a first positioning hole (not shown) may also be provided in the base 1. Preferably, the first positioning hole is a kidney-shaped hole. At least one second positioning hole 24 is correspondingly provided in the rotating table 21. Preferably, the second positioning holes 24 are two circular holes arranged in a left side and a lower side of the rotating table (according to the orientation in Fig. 2). The first positioning hole and the second positioning hole 24 can be connected through a positioning pin 5 inserted therein, so as to realize the installation, adjustment and calibration between the rotating table 21 and the base 1, that is, the installation, adjustment and calibration when the battery swap platform is in the initial position and the rotated position, thereby improving the stability and the battery swap success rate of the battery swap platform.

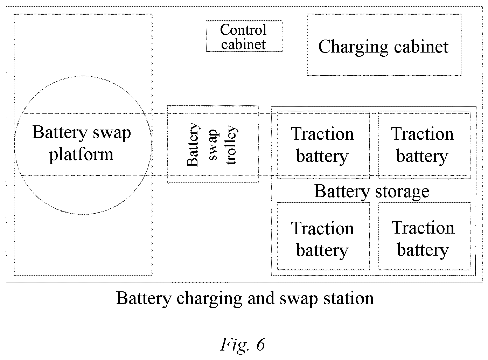

Now referring to Fig. 6, Fig. 6 is a schematic layout diagram of a battery charging and swap station of the invention.

As shown in Fig. 6, the invention also provides a battery charging and swap station, which mainly comprises a battery swap platform, a battery storage and a battery swap robot. Preferably, the battery swap platform is the above-mentioned battery swap platform with the rotating table 21, and the traction batteries in the battery storage are arranged in a direction perpendicular to the forward direction of the electric vehicle (i.e., transversely arranged). As can be clearly seen from Fig. 6, due to the battery swap platform with the rotating table 21 used in the battery charging and swap station of the invention, the traction batteries in the battery storage can be transversely arranged, thus greatly reducing the space of the battery storage, making the arrangement of the equipment in the battery charging and swap station more rational and reducing the occupied area of the battery charging and swap station.

Finally, referring to Figs. 2, 3 and 6, the working principle of the battery swap platform of the invention will be described with a complete battery swap process as an example.

An electric vehicle is parked at the battery swap position, at which time the rotating table 21 is in the initial position (i.e. the position shown in Fig. 2) → the electric vehicle is positioned and lifted → the battery swap robot moves to the rotating table 21 below the electric vehicle → the rotating table 21 rotates by 90 degrees and reaches the rotated position (i.e. the position shown in Fig. 3) → the battery swap robot detaches the used traction battery → the rotating table 21 rotates by 90 degrees in a reverse direction and returns to the initial position → the battery swap robot exits the platform carrying the used traction battery and replaces the used traction battery with a fresh traction battery from the battery storage → the battery swap robot carries the fresh traction battery to the rotating table 21 → the rotating table 21 rotates by 90 degrees and reaches the rotated position again → the battery swap robot installs the fresh traction battery onto the electric vehicle → the rotating table 21 rotates by 90 degrees in the reverse direction and returns to the initial position → the battery swap robot exit the rotating table 21 → the electric vehicle is lowered → the electric vehicle exits the battery swap platform and the battery swapping is finished.

To sum up, according to the invention, by providing the battery swap platform with the rotating table 21 rotatable by a set angle and the driving portion 3 supplying power for the rotating table 21, the rotating table 21 can rotate by 90 degrees relative to the base 1, and this rotation can change the orientation of the battery swap robot and the traction batteries carried thereon, so that the traction batteries in the battery storage can be placed more flexibly, the space of the platform is fully utilized, dimensions of the space layout of the battery storage are shortened, and thus the occupied area of the whole station is reduced, thereby solving the problems of the large occupied area and waste of resources existing in the battery charging and swap station using the direct-entry type battery swap platform in the prior art, so the invention is suitable for large-scale promotion and application.

## Claims

1. A battery swap platform comprising a fixed structure and a rotating portion (2),
**characterized in that**
the rotating portion (2) is configured to allow a battery swap robot to rest thereon, and the rotating portion (2) is configured to be rotatable by a set angle relative to the fixed structure; and
wherein the rotating portion (2) comprises a rotating table (21) and a guide rail (22) arranged on the rotating table (21), the guide rail (22) being configured to allow the battery swap robot to move along it.

2. The battery swap platform according to claim 1, **characterized in that** the fixed structure comprises a base (1), the battery swap platform further comprises a driving portion (3) arranged on the base (1), and the driving portion (3) can drive the rotating table(21) to rotate.

3. The battery swap platform according to claim 2, **characterized in that** the driving portion (3) comprises an electric motor (31) and a first transmission member (33), the rotating table (21) is provided with a second transmission member (23) matching the first transmission member (33), and the electric motor (31) can drive the first transmission member (33) to rotate, thereby driving the second transmission member (23) to rotate.

4. The battery swap platform according to claim 3, **characterized in that** a reducer (32) is further arranged between the electric motor (31) and the first transmission member (33), a third transmission member (34) is arranged on an output shaft of the reducer (32), and the third transmission member (34) is mated and connected with the first transmission member (33).

5. The battery swap platform according to claim 4, **characterized in that** the first transmission member (33) is a first gear or a linear rack, and/or the second transmission member (23) is a circumferential rack, and/or the third transmission member (34) is a second gear.

6. The battery swap platform according to any one of claims 2 to 5, **characterized in that** one of the base (1) and the rotating table (21) is provided with a hole structure, the other of the base (1) and the rotating table (21) is provided with a shaft structure, and the hole structure and the shaft structure are rotatably connected via a bearing.

7. The battery swap platform according to claim 6, **characterized in that** the base (1) is provided with a first positioning hole, the rotating portion (2) is correspondingly provided with a second positioning hole (24), and the first positioning hole and the second positioning hole (24) can be connected by a positioning pin (5) inserted therein so as to realize relative fixation of the rotating table (21) and the base (1).

8. The battery swap platform according to claim 2, **characterized in that** the base (1) is configured to be fixedly connected to a floor of the battery charging and swap station through bolts, and/or the set angle is 90 degrees.

9. A battery charging and swapping station, which comprises a battery swap platform, a battery storage and a battery swap robot, **characterized in that** the battery swap platform is the battery swap platform according to any of claims 1 to 8.

## Patentansprüche

1. Batteriewechselplattform, umfassend eine feststehende Struktur und einen Drehteil (2),
**dadurch gekennzeichnet, dass**
der Drehteil (2) so ausgelegt ist, dass ein Batteriewechselroboter darauf liegen kann, und der Drehteil (2) dazu ausgelegt ist, um einen vorgegebenen Winkel relativ zu der feststehenden Struktur drehbar zu sein; und
wobei der Drehteil (2) einen Drehtisch (21) und eine auf dem Drehtisch (21) angeordnete Führungsschiene (22) umfasst, wobei die Führungsschiene (22) so ausgelegt ist, dass der Batteriewechselroboter sich entlang derselben bewegen kann.

2. Batteriewechselplattform nach Anspruch 1, **dadurch gekennzeichnet, dass** die feststehende Struktur eine Basis (1) umfasst, die Batteriewechselplattform zusätzlich einen auf der Basis (1) angeordneten Antriebsteil (3) umfasst und der Antriebsteil (3) den Drehtisch (21) in Drehung versetzen kann.

3. Batteriewechselplattform nach Anspruch 2, **dadurch gekennzeichnet, dass** der Antriebsteil (3) einen Elektromotor (31) und ein erstes Getriebeelement (33) umfasst, der Drehtisch (21) mit einem zweiten Getriebeelement (23) versehen ist, das zu dem ersten Getriebeelement (33) passend ist, und der Elektromotor (31) das erste Getriebeelement (33) in Drehung versetzen kann, wodurch das zweite Getriebeelement (23) in Drehung versetzt wird.

4. Batteriewechselplattform nach Anspruch 3, **dadurch gekennzeichnet, dass** zusätzlich eine Untersetzungseinrichtung (32) zwischen dem Elektromotor (31) und dem ersten Getriebeelement (33) angeordnet ist, dass ein drittes Getriebeelement (34) auf einer Abtriebswelle der Untersetzungseinrichtung (32) angeordnet ist und dass das dritte Getriebeelement (34) mit dem ersten Getriebeelement (33) gepaart und verbunden ist.

5. Batteriewechselplattform nach Anspruch 4, **dadurch gekennzeichnet, dass** das erste Getriebeelement (33) ein erstes Zahnrad oder eine lineare Zahnstange ist und/oder das zweite Getriebeelement (23) eine umlaufende Zahnstange ist und/oder das dritte Getriebeelement (34) ein zweites Zahnrad ist.

6. Batteriewechselplattform nach einem der Ansprüche 2 bis 5, **dadurch gekennzeichnet, dass** die Basis (1) oder der Drehtisch (21) mit einer Lochstruktur versehen ist, die/der andere der Basis (1) und des Drehtisches (21) mit einer Wellenstruktur versehen ist und die Lochstruktur und die Wellenstruktur über ein Lager drehbar verbunden sind.

7. Batteriewechselplattform nach Anspruch 6, **dadurch gekennzeichnet, dass** die Basis (1) mit einem ersten Positionierungsloch versehen ist, der Drehteil (2) entsprechend mit einem zweiten Positionierungsloch (24) versehen ist, und das erste Positionierungsloch und das zweite Positionierungsloch (24) durch einen darin eingesetzten Positionierungsstift (5) verbindbar sind, um eine relative Fixierung des Drehtisches (21) und der Basis (1) zu realisieren.

8. Batteriewechselplattform nach Anspruch 2, **dadurch gekennzeichnet, dass** die Basis (1) dazu ausgelegt ist, durch Schrauben fest mit einem Boden der Batterielade- und -wechselstation verbunden zu werden und/oder der vorgegebene Winkel 90 Grad beträgt.

9. Batterielade- und -wechselstation, die eine Batteriewechselplattform, ein Batteriefach und einen Batteriewechselroboter umfasst, **dadurch gekennzeichnet, dass** die Batteriewechselplattform die Batteriewechselplattform nach einem der Ansprüche 1 bis 8 ist.

## Revendications

1. Plateforme de permutation de batterie comprenant une structure fixe et une partie rotative (2),
**caractérisée en ce que**
la partie rotative (2) est configurée pour permettre à un robot de permutation de batterie de rester sur celle-ci, et la partie rotative (2) est configurée pour pouvoir tourner selon un angle défini par rapport à la structure fixe ; et
dans laquelle la partie rotative (2) comprend une table rotative (21) et un rail de guidage (22) agencé sur la table rotative (21), le rail de guidage (22) étant configuré pour permettre au robot de permutation de batterie de se déplacer le long de celui-ci.

2. Plateforme de permutation de batterie selon la revendication 1, **caractérisée en ce que** la structure fixe comprend une base (1), la plateforme de permutation de batterie comprend en outre une partie d'entraînement (3) agencée sur la base (1), et la partie d'entraînement (3) peut entraîner la table rotative (21) en rotation.

3. Plateforme de permutation de batterie selon la revendication 2, **caractérisée en ce que** la partie d'entraînement (3) comprend un moteur électrique (31) et un premier élément de transmission (33), la table rotative (21) est pourvue d'un second élément de transmission (23) correspondant au premier élément de transmission (33), et le moteur électrique (31) peut entraîner le premier élément de transmission (33) en rotation, entraînant ainsi le second élément de transmission (23) en rotation.

4. Plateforme de permutation de batterie selon la revendication 3, **caractérisée en ce qu'**un réducteur (32) est en outre agencé entre le moteur électrique (31) et le premier élément de transmission (33), un troisième élément de transmission (34) est agencé sur un arbre de sortie du réducteur (32), et le troisième élément de transmission (34) est accouplé et relié au premier élément de transmission (33).

5. Plateforme de permutation de batterie selon la revendication 4, **caractérisée en ce que** le premier élément de transmission (33) est un premier engrenage ou une crémaillère linéaire, et/ou le second élément de transmission (23) est une crémaillère circonférentielle, et/ou le troisième élément de transmission (34) est un second engrenage.

6. Plateforme de permutation de batterie selon l'une quelconque des revendications 2 à 5, **caractérisée en ce que** l'une de la base (1) et de la table rotative (21) est pourvue d'une structure de trou, l'autre de la base (1) et de la table rotative (21) est pourvue d'une structure d'arbre, et la structure de trou et la structure d'arbre sont reliées de manière rotative par l'intermédiaire d'un palier.

7. Plateforme de permutation de batterie selon la revendication 6, **caractérisée en ce que** la base (1) est pourvue d'un premier trou de positionnement, la partie rotative (2) est pourvue de manière correspondante d'un second trou de positionnement (24), et le premier trou de positionnement et le second trou de positionnement (24) peuvent être reliés par une broche de positionnement (5) insérée dans ceux-ci de manière à réaliser une fixation relative de la table rotative (21) et de la base (1).

8. Plateforme de permutation de batterie selon la revendication 2, **caractérisée en ce que** la base (1) est configurée pour être reliée de manière fixe à un plancher de la station de charge et de permutation de batterie par l'intermédiaire de boulons, et/ou l'angle défini est de 90 degrés.

9. Station de charge et de permutation de batterie, qui comprend une plateforme de permutation de batterie, un stockage de batterie et un robot de permutation de batterie, **caractérisée en ce que** la plateforme de permutation de batterie est la plateforme de permutation de batterie selon l'une quelconque des revendications 1 à 8.
